(19) Europäisches Patentamt
European Patent Office
Office européen des brevets

(11) **EP 4 542 449 A1**

(12) **EUROPEAN PATENT APPLICATION**
published in accordance with Art. 153(4) EPC

(43) Date of publication:
**23.04.2025 Bulletin 2025/17**

(21) Application number: **23842345.3**

(22) Date of filing: **19.07.2023**

(51) International Patent Classification (IPC):
***G06N 3/084*** (2023.01)

(52) Cooperative Patent Classification (CPC):
**G06F 13/42; G06N 3/0464; G06N 3/048;
G06N 3/084**

(86) International application number:
**PCT/CN2023/108091**

(87) International publication number:
**WO 2024/017283 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.07.2022 CN 202210869512
19.12.2022 CN 202211634067**

(71) Applicant: **Huawei Technologies Co., Ltd.
Shenzhen, Guangdong 518129 (CN)**

(72) Inventors:
• **YU, Zhaohui
Shenzhen, Guangdong 518129 (CN)**
• **ZHANG, Qi
Shenzhen, Guangdong 518129 (CN)**
• **ZHAO, Jiawei
Shenzhen, Guangdong 518129 (CN)**
• **YOU, Jun
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **MODEL TRAINING SYSTEM AND METHOD AND RELATED DEVICE**

(57) This application provides a model training system, used for the model training system. A second node in the model training system is configured to send a plurality of parameter obtaining requests to a first node. The first node is configured to: determine, based on the plurality of parameter obtaining requests, that parameters obtained based on the plurality of parameter obtaining requests are respectively stored in a first memory and a second memory, combine a parameter obtained from the first memory and a parameter obtained from the second memory, and send a combined parameter to the second node. The second node is further configured to: receive the combined parameter, and train a model based on the combined parameter. In this application, the parameter obtained from the first memory and the parameter obtained from the second memory are combined and then sent. In particular, in a scenario in which a large quantity of parameters need to be transferred between nodes such as nodes for training of a recommendation model, a quantity of transmitted packets may be greatly reduced, to improve data transmission efficiency.

FIG. 5A

CONT. FROM FIG. 5A

CONT. FROM FIG. 5A

S403: Receive the combined parameter, and train a model based on the combined parameter

S4031: The transceiver module of the second node receives the combined parameter

S4032: Transfer the combined parameter to the training module

S40321: Write the combined parameter into a cache located in the second node

S40322: Read the combined parameter from the cache, and transfer the combined parameter to the training module

S406: After receiving the gradient, distinguish a gradient corresponding to the parameter stored in the first memory from a gradient corresponding to the parameter stored in the second memory, and separately update the parameter in the first memory and the parameter in the second memory

S4061: Update the parameter based on the gradient, to obtain an updated parameter

S4062: Write the updated parameter into a storage location of the parameter

S405: Combine the gradient data, and send combined gradient data to the first node

S404: Perform model training based on the combined parameter, to obtain gradient data

FIG. 5B

## Description

This application claims priority to Chinese Patent Application No. 202210869512.6, filed with the China National Intellectual Property Administration on July 22, 2022 and entitled "RECOMMENDATION SYSTEM" and priority to Chinese Patent Application No. 202211634067.1, filed with the China National Intellectual Property Administration on December 19, 2022 and entitled "MODEL TRAINING SYSTEM AND METHOD, AND RELATED DEVICE", which are incorporated herein by reference in their entireties.

## TECHNICAL FIELD

This application relates to the artificial intelligence field, and in particular, to a model training system and method, and a related device.

## BACKGROUND

In a computer node cluster, data usually needs to be frequently transferred between different nodes. For example, in a training scenario of a recommendation model, a large amount of memory space is required due to an excessively large quantity of model parameters of the recommendation model. Therefore, the model parameters may be deployed in the computer node cluster.

Search and recommendation tasks are common service scenarios of Internet applications, and are core technologies of the Internet. In an existing search scenario, attribute information of an object (a user or an item) is represented as an embedding vector, and the embedding vector is updated in a model training process. During model training, a node responsible for model training may obtain a required model parameter from a node that is in the node cluster and that is responsible for storing a training sample.

In an existing implementation, the node responsible for storing a training sample may send model parameters one by one to the node responsible for model training. When there are a large quantity of model parameters, data transmission efficiency is low, and consequently model training efficiency is low.

## SUMMARY

This application provides a model training system, to improve data transmission efficiency between nodes in a computing node cluster during model training. In addition, this application further provides a model training system and method, a computer-readable storage medium, and a computer program product.

According to a first aspect, this application provides a model training system. The model training system includes a plurality of nodes, and parameters required for training a model are distributed in the plurality of nodes. A first node in the plurality of nodes includes a first memory and a second memory, the first memory and the second memory respectively store some parameters of the model, and the first memory and the second memory communicate with a processor in the first node according to different protocols. A second node in the plurality of nodes is configured to send a plurality of parameter obtaining requests to the first node. The plurality of parameter obtaining requests are used to obtain parameters required by the second node to train the model. The first node is configured to: determine, based on the plurality of parameter obtaining requests, that the parameters obtained based on the plurality of parameter obtaining requests are respectively stored in the first memory and the second memory, combine a parameter obtained from the first memory and a parameter obtained from the second memory, and send a combined parameter to the second node. The second node is further configured to: receive the combined parameter, and train the model based on the combined parameter.

In this embodiment of this application, the parameter obtained from the first memory and the parameter obtained from the second memory are combined and then sent. In particular, in a scenario in which a large quantity of parameters need to be transferred between nodes such as nodes for training of a recommendation model, a quantity of transmitted packets may be greatly reduced, to improve data transmission efficiency.

In a possible implementation, when the first node is configured to combine the parameter obtained from the first memory and the parameter obtained from the second memory, the first node is specifically configured to cache both the parameter obtained from the first memory and the parameter obtained from the second memory into the first memory for combination.

In a possible implementation, when the first node is configured to combine the parameter obtained from the first memory and the parameter obtained from the second memory, the first node is specifically configured to cache both the parameter obtained from the first memory and the parameter obtained from the second memory into the second memory for combination.

In a possible implementation, when the first node is configured to combine the parameter obtained from the first memory and the parameter obtained from the second memory, the first node is specifically configured to: cache the parameter obtained from the first memory into the second memory, and cache the parameter obtained from the second memory into the first memory.

Compared with a manner of caching the parameter obtained from the first memory into the first memory, the manner of caching the parameter obtained from the first memory into the second memory may reduce occupation of a DDR bandwidth in a write process.

Compared with a manner of caching the parameter obtained from the second memory into the second memory, the manner of caching the parameter obtained from the second memory into the first memory may reduce a data transmission delay.

The parameter obtained from the first memory and the parameter obtained from the second memory are combined and then cached into the first memory, so that a data transmission delay may be reduced.

The parameter obtained from the first memory and the parameter obtained from the second memory are combined and then cached into the second memory, so that occupation of a DDR bandwidth in a write process may be reduced.

In a possible implementation, the second node is further configured to: after receiving the combined parameter, rank the combined parameter and a parameter received from another node, and then train the model based on the ranked parameters.

In a possible implementation, the second node is further configured to: after completing training of the model, obtain gradient data generated after the model is trained, and determine gradients corresponding to parameters in the first node based on the gradient data; and combine the gradients corresponding to the parameters in the first node, and then send a combined gradient to the first node; and the first node is configured to: after receiving the gradient, distinguish a gradient corresponding to the parameter stored in the first memory from a gradient corresponding to the parameter stored in the second memory, and separately update the parameter in the first memory and the parameter in the second memory.

In a possible implementation, the first memory is connected to the processor according to a DDR protocol, the second memory is an extended memory, and the second memory is connected to the processor according to a compute express link CXL protocol.

In this embodiment of this application, the model parameter is stored in the extended memory of the first node. When data is read from the extended memory, no DDR bandwidth is occupied, to reduce occupation of the DDR bandwidth. In addition, due to limited storage space of the memory, in a scenario in which a quantity of parameters of the model such as the recommendation model is excessively large, a quantity of nodes storing the model parameter may be reduced by storing the model parameter in the extended memory.

In a possible implementation, the model is a recommendation model; and the parameter is an embedding embedding vector.

According to a second aspect, this application provides a model training method, applied to a distributed training system. The distributed training system includes a plurality of nodes, and parameters required for training a model are distributed in the plurality of nodes.

A first node in the plurality of nodes includes a first memory and a second memory, the first memory and the second memory respectively store some parameters of the model, and the first memory and the second memory communicate with a processor in the first node according to different protocols. The method includes:

A second node in the plurality of nodes sends a plurality of parameter obtaining requests to the first node, where the plurality of parameter obtaining requests are used to obtain parameters required by the second node to train the model;

the first node determines, based on the plurality of parameter obtaining requests, that the parameters obtained based on the plurality of parameter obtaining requests are respectively stored in the first memory and the second memory, combines a parameter obtained from the first memory and a parameter obtained from the second memory, and sends a combined parameter to the second node; and
the second node receives the combined parameter, and trains the model based on the combined parameter.

In a possible implementation, the combining a parameter obtained from the first memory and a parameter obtained from the second memory includes:
caching both the parameter obtained from the first memory and the parameter obtained from the second memory into the first memory for combination.

In a possible implementation, the combining a parameter obtained from the first memory and a parameter obtained from the second memory includes:
caching both the parameter obtained from the first memory and the parameter obtained from the second memory into the second memory for combination.

In a possible implementation, the combining a parameter obtained from the first memory and a parameter obtained from the second memory includes:
caching the parameter obtained from the first memory into the second memory, and caching the parameter obtained from the second memory into the first memory.

In a possible implementation, the method further includes:

After receiving the combined parameter, the second node ranks the combined parameter and a parameter received from another node, and then trains the model based on the ranked parameters.

In a possible implementation, the method further includes:

After completing training of the model, the second node obtains gradient data generated after the model is trained, and determines gradients corresponding to parameters in the first node based on the gradient data; and

combines the gradients corresponding to the parameters in the first node, and then sends a combined gradient to the first node; and

after receiving the gradient, the first node distinguishes a gradient corresponding to the parameter stored in the first memory from a gradient corresponding to the parameter stored in the second memory, and separately updates the parameter in the first memory and the parameter in the second memory.

In a possible implementation, the first memory is connected to the processor according to a DDR protocol, the second memory is an extended memory, and the second memory is connected to the processor according to a compute express link CXL protocol.

In a possible implementation, the model is a recommendation model; and

the parameter is an embedding embedding vector.

The model training method provided in the second aspect corresponds to the model training system provided in the first aspect. Therefore, for technical effects of the model training method in any possible implementation of the second aspect, refer to the technical effects of the first aspect and the corresponding implementation of the first aspect. Details are not described herein.

According to a third aspect, this application provides a computing node. The computing node includes a processor, a storage, and a network interface card. The storage is configured to store instructions. When the computing node runs, the processor and the network interface card are configured to execute the instructions stored in the storage, to enable the computing node to perform the steps performed by the first node or the second node in any one of the first aspect or the possible implementations. It should be noted that the storage may be integrated into the processor, or may be independent of the processor. The computing node may further include a bus. The processor is connected to the storage through the bus. The storage may include a readable memory and a random access memory. In addition, the storage may further include a memory and an extended memory.

According to a fourth aspect, this application provides a computer-readable storage medium. The computer-readable storage medium stores instructions. When the instructions are run on a computing node, the computing node is enabled to perform the method in any one of the second aspect or the implementations of the second aspect.

According to a fifth aspect, this application provides a computer program product including instructions. When the computer program product runs on a computing node, the computing node is enabled to perform the method in any one of the second aspect or the implementations of the second aspect or the method in any one of the second aspect or the implementations of the second aspect.

In this application, based on the implementations provided in the foregoing aspects, the implementations may be combined to provide more implementations.

## BRIEF DESCRIPTION OF DRAWINGS

To describe the technical solutions in embodiments of this application more clearly, the following briefly describes the accompanying drawings required for describing embodiments. Clearly, the accompanying drawings in the following descriptions show merely some embodiments recorded in this application, and a person of ordinary skill in the art may still derive other drawings from these accompanying drawings.

FIG. 1 is a schematic diagram of a recommendation scenario according to an embodiment of this application;

FIG. 2A is a schematic diagram of an architecture for model training and inference according to an embodiment of this application;

FIG. 2B is a schematic diagram of an architecture of a training system according to an embodiment of this application;

FIG. 3A is a schematic diagram of an example node architecture according to an embodiment of this application;

FIG. 3B is a schematic diagram of another example node architecture according to an embodiment of this application;

FIG. 4 is a schematic diagram of another example node architecture according to an embodiment of this application;

FIG. 5A and FIG. 5B are a schematic flowchart of a model training method according to an embodiment of this application;

FIG. 6 is a schematic diagram of data storage according to an embodiment of this application;

FIG. 7 is a schematic diagram of a data pull procedure according to an embodiment of this application;

FIG. 8 is a schematic diagram of a data push procedure according to an embodiment of this application; and

FIG. 9 is a schematic diagram of a structure of a model training apparatus according to an embodiment of this application.

## DESCRIPTION OF EMBODIMENTS

The terms "first", "second", and the like in the specification, the claims, and the accompanying drawings of this application are used to distinguish between similar objects, and are not necessarily used to describe a specific order or sequence. It should be understood that the terms used in such a manner are interchangeable in proper situations, and this is merely a distinguishing manner used when objects with a same attribute are described in embodiments of this application.

"At least one" means one or more, and "a plurality of" means two or more.

The term "and/or" describes an association relationship between associated objects, and indicates that three relationships may exist. For example, A and/or B may indicate the following three cases: Only A exists, both A and B exist, and only B exists, where A and B may be singular or plural.

The character "/" usually indicates an "or" relationship between associated objects. For example, A/B may indicate A or B.

In addition, the terms "include", "comprise", and "have" in the descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that in this application, the word such as "example" or "for example" is used to represent giving an example or descriptions. Any implementation (for example, an embodiment of this application) or design solution described as an "example" or "for example" should not be explained as being more preferred or having more advantages than another implementation or design solution. Exactly, use of the word such as "example" or "for example" is intended to present a related concept in a specific manner.

In the specification and the accompanying drawings of this application, "of (English: of)", "relevant (English: relevant)", and "corresponding (English: corresponding)" may be used interchangeably sometimes. It should be noted that when a difference between "of", "relevant", and "corresponding" is not emphasized, meanings expressed by "of", "relevant", and "corresponding" are consistent.

The following explains and describes some terms and concepts in embodiments of this application.

(1) Node

For example, the node may be a first node and a second node in embodiments of this application.

The node is a device that has at least one of a data processing function and a data storage function. An operating system runs on the node, and the node may be distinguished by using the operating system. That is, different operating systems run on different nodes. In other words, hardware and software used for running an operating system may be considered as belonging to a same node. In this application, the node may be a complete physical machine, for example, a terminal or a network device such as a server or a server agent. Data access in this application may be understood as that a node accesses, by using an instance, data maintained by another node. A device in the node is a part or a component in the node. For example, when the node is a physical machine, both a CPU and a memory are devices in the node. The physical machine is a computer packaged into a product, for example, a server, a desktop computer, an all-in-one (all-in-one, AIO) PC, a notebook computer, or a smartphone.

(2) DRAM

This is a semiconductor memory. A main working principle is that a value relationship between an amount of charges stored in a capacitor and a threshold represents a binary bit (bit) whose value is 1 or 0. Due to a phenomenon of leakage current in a transistor in reality, the amount of charges stored in the capacitor is not enough to correctly determine data, resulting in data corruption. Therefore, for the DRAM, periodic charging (which may also be referred to as refresh) is an inevitable condition. Because of this characteristic indicating that the memory needs to be periodically refreshed, the memory is referred to as a "dynamic" random access memory. In contrast, provided that data is stored in a static random access memory, no data is lost even if no refresh is performed.

(3) Double data rate (double data rate, DDR)

DDR is a joint electron device engineering council (joint electron device engineering council, JEDEC) standard, and is a parallel bus communication standard. The standard includes physical specifications of connection interfaces, protocols related to data transmission, and the like. (4) Local: For an instance, a node that runs the instance (for example, an instance related to model training) is a local node. For example, a full name of a local memory needs to be a local memory of an instance, that is, a memory of a node that runs the instance. The node that runs the instance may be described at different granularities, for example, may be only a processor, for example, a central processing unit (Central Processing Unit, CPU) or a graphics processing unit (Graphics Processing Unit, GPU), or may be a complete physical machine, that is, includes a processing circuit and a storage medium. Specific descriptions to be used depend on whether an involved data access process is performed between physical machines.

(5) Remote: "Remote" is a concept relative to "local". To be specific, for an instance, a node other than a node that runs the instance is a remote node. "Remote" may represent a device having a computing capability, or may represent a device configured to store data.

(6) Identifier: The identifier is used to distinguish one type of object or one object from other objects of a same type or different types, for example, an identifier of a node, an identifier of a network, and an identifier of a network interface card. The identifier may be a name or a number, or a distinguishing feature may be used as the identifier, for example, a type is used as the identifier. Implementation of various identifiers is not limited in this application, provided that the identifiers can be distinguished. For example, in some implementations of this application, an identifier of virtual address space of an instance is used as an identifier of the instance, instead of using a common manner of using a name or a number of the instance as the identifier of the instance.

(7) Address space: The address space is also referred to as storage space, and is one or more address segments that can be used by a device or an instance. For example, virtual address space of a device or an instance is one or more virtual address segments that can be used by the device or the instance, that is, belong to the device or the instance. The virtual address space of the device or the instance is allocated by an operating system in which the device or the instance is located. For another example, physical address space of a device or an instance is one or more physical address segments allocated to the device or the instance for use. When the device or the instance is in the physical address space, another device or instance cannot use an address in the physical address space. The physical address space of the instance is allocated by an operating system that runs the instance. The allocation may be dynamic. For example, as the instance runs, increasingly large physical address space is occupied, but there is an upper limit. A size and a range of the physical address space of the device are usually fixed.

The following describes a scenario of embodiments of this application by using an example.

Embodiments of this application may be applied to the information recommendation field. The scenario includes but is not limited to scenarios such as e-commerce product recommendation, result recommendation by a search engine, software recommendation in an application market, music recommendation, video recommendation, news recommendation, reading content recommendation, and a lifelong partner-related application. A recommended item in various different application scenarios may also be referred to as a "recommended object". In different recommendation scenarios, the recommended object may be a media content item, for example, an app, a video (for example, a short video or a live video), music, a commodity (for example, in a presentation interface of an online shopping platform, different commodities are selected for presentation based on different users), or an article.

In an example of an application store, when a user opens an application market in a mobile phone, a recommendation module in the application market may be triggered. The recommendation module in the application market predicts download possibilities of the user for given candidate applications based on a historical download record of the user, a tap record of the user, a feature of the application, and environment feature information such as time and a location. Based on a prediction result, the application market displays the applications in descending order of the possibilities, to increase a download probability of the application. Specifically, an application that is more likely to be downloaded is ranked at a front location, and an application that is less likely to be downloaded is ranked at a back location. A user behavior is also stored in a log, and a parameter of a prediction model is trained and updated by using an offline training module.

For another example, in a lifelong partner-related application, a cognitive brain may be constructed based on historical data of a user in domains such as video, music, and news, by using various models and algorithms, and by simulating a human brain mechanism, and a lifelong learning system framework of the user may be established. A lifelong partner may record a past event of the user based on system data, application data, and the like, understand a current intention of the user, predict a future action or behavior of the user, and finally implement an intelligent service.

A recommendation process may be implemented by a recommendation system, and the recommendation system may present information of interest to the user. To determine information that the user is interested in, matching between the user and an item needs to be performed based on context information, attribute information of the user, attribute information of the item, and the like.

The recommendation system usually collects a user behavior log, performs log data preprocessing (for example, quantization and sampling), performs sample set training to obtain a recommendation model, and analyzes and processes, based on the recommendation model, an object (for example, an app or music) involved in a scenario corresponding to a training sample item. For example, if a sample selected in a training phase of the recommendation model is from an operation behavior performed by a user of an application market in a mobile phone on a recommended app, the recommendation model obtained through training is applicable to the app application market in the mobile phone, or may be used in an app application market in another type of terminal to recommend an app in the terminal. The recommendation model finally calculates a recommendation probability or a score of each to-be-recommended object. The recommendation system selects a recommendation result according to a specific selection rule, for example, performs ranking based on the recommendation probability or the score, and presents the recommendation result to the user by using a corresponding application or terminal device, and the user performs an operation on an object in the recommendation result to generate a user behavior log and another phase.

The following describes an application scenario of this application.

This application may be applied to a recommendation system, and specifically, may be applied to a training process of a recommendation model in the recommendation system.

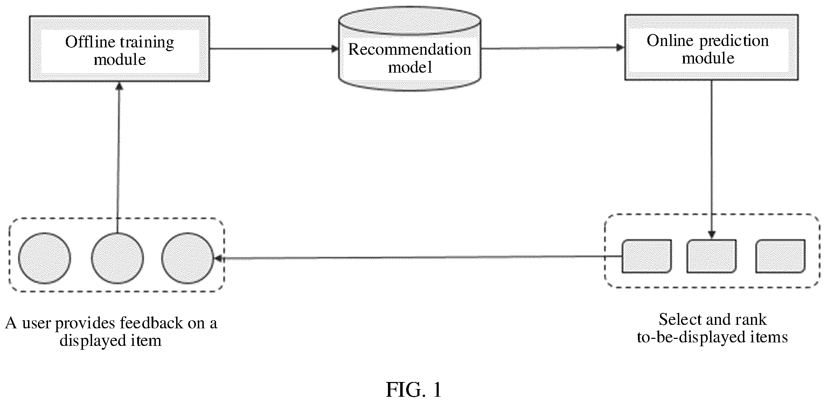

For example, FIG. 1 is a schematic diagram of a recommendation system according to an embodiment of this application. As shown in FIG. 1, when a user enters the system, a recommendation request is triggered. The recommendation system inputs the request and related information into a recommendation model, and then predicts selection rates of the user for items in the system. Further, the items are arranged in descending order based on the predicted selection rates or a function of the selection rates. That is, the recommendation system may sequentially display the items at different locations as a recommendation result for the user. The user browses items at different locations, and performs user behaviors such as browsing, selecting, and downloading. In addition, an actual behavior of the user is stored in a log as a model parameter, and the parameter of the recommendation model is continuously updated by using a training module (for example, an offline or online training module), to improve prediction effect of the model.

For example, when the user opens an application market in an intelligent terminal (for example, a mobile phone), a recommendation system in the application market may be triggered. The recommendation system in the application market predicts, based on a historical behavior log of the user, for example, a historical download record of the user and a user selection record, and a feature of the application market, for example, environment feature information such as time and a location, probabilities that the user downloads candidate recommended applications (applications, apps). Based on a calculation result, the recommendation system in the application market may display the candidate apps in descending order of values of the predicted probabilities, to increase a download probability of the candidate app.

For example, an app with a high predicted user selection rate may be displayed at a front recommendation location, and an app with a low predicted user selection rate may be displayed at a back recommendation location.

The foregoing recommendation model may be a neural network model. The following describes related terms and concepts of a neural network that may be used in embodiments of this application.

(1) Neural network

The neural network may include a neuron. The neuron may be an operation unit that uses xs (namely, input data) and an intercept of 1 as an input. An output of the operation unit may be as follows:

$$h_{W,b}(x) = f\left(W^T x\right) = f\left(\sum_{s=1}^{n} W_s x_s + b\right)$$

Herein, s=1, 2, ..., and n, n is a natural number greater than 1, Ws is a weight of xs, b is a bias of the neuron, and f is an activation function (activation function) of the neuron, and is used to introduce a non-linear characteristic into the neural network, to convert an input signal in the neuron into an output signal. The output signal of the activation function may be used as an input of a next convolutional layer. The activation function may be a sigmoid function. The neural network is a network formed by linking a plurality of single neurons together. That is, an output of a neuron may be an input of another neuron. An input of each neuron may be connected to a local receptive field of a previous layer to extract a feature of the local receptive field. The local receptive field may be a region including several neurons.

(2) Loss function

In a process of training a deep neural network, it is expected that an output of the deep neural network is as much as possible close to a predicted value that is actually expected. Therefore, a predicted value of a current network and a target value that is actually expected may be compared, and then a weight vector of each layer in the neural network is updated based on a difference between the predicted value and the target value (certainly, there is usually an initialization process before update is performed for the first time, that is, parameters are preconfigured for all layers in the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain the difference between the predicted value and the target value through comparison" needs to be predefined. This is a loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss.

(3) Back propagation

An error back propagation (back propagation, BP) algorithm may be used to correct a value of a parameter in an initial model in a training process, so that an error loss of the model is increasingly small. Specifically, an input signal is transferred forward until an error loss occurs in an output, and the parameter in the initial model is updated based on back propagation error loss information, so that the error loss converges. The back propagation algorithm is an error-loss-centered back propagation motion, and is used to obtain an optimal model parameter, for example, a weight matrix.

The following describes a schematic diagram of an application architecture of this application.

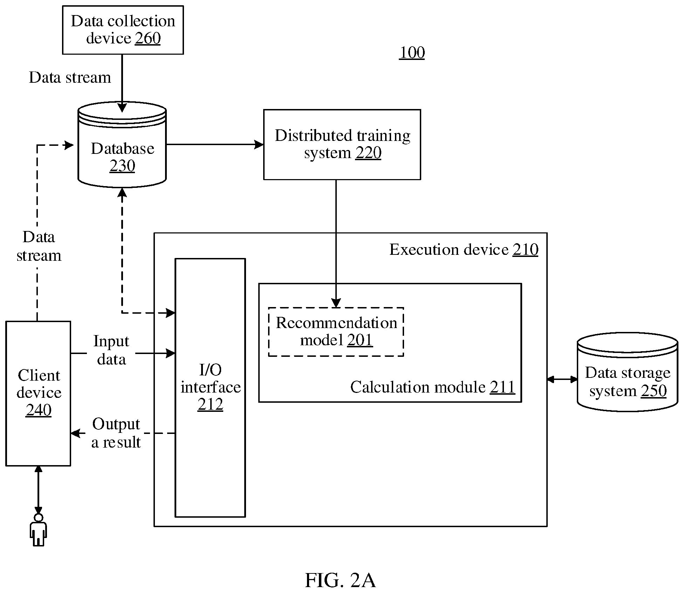

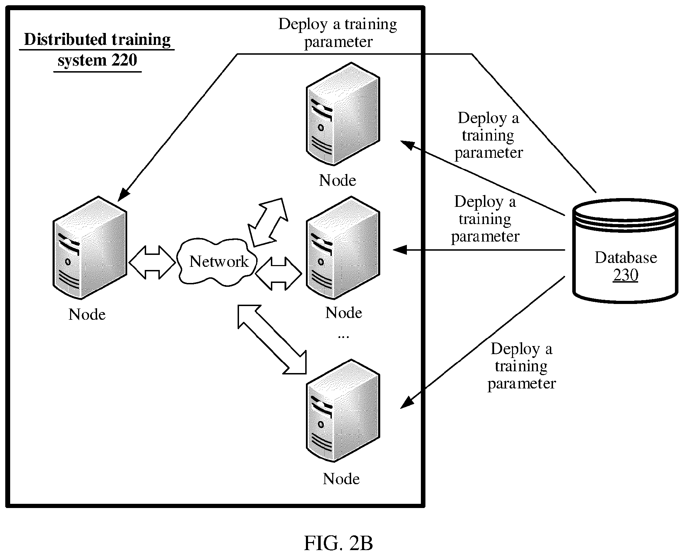

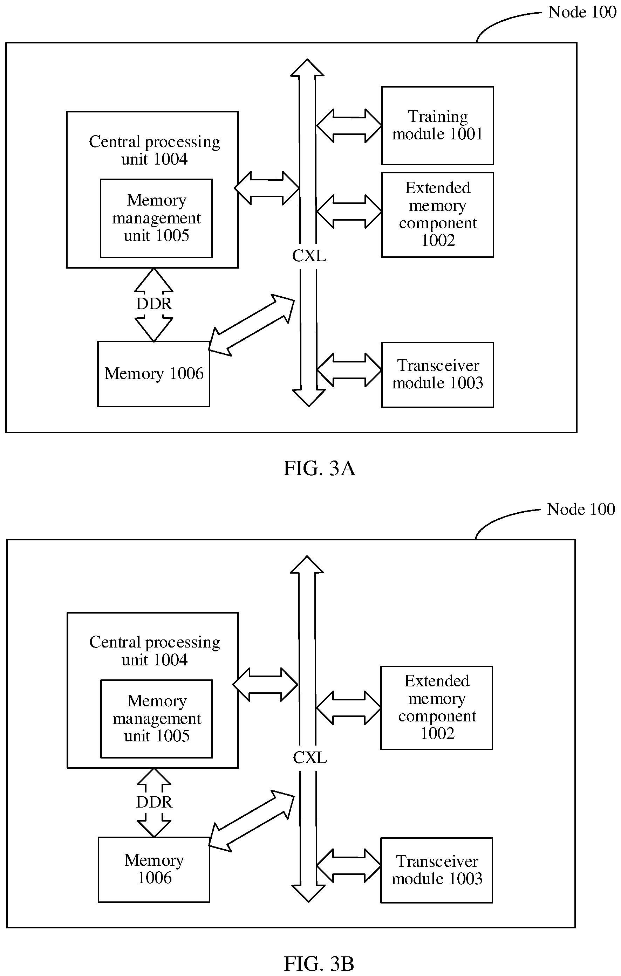

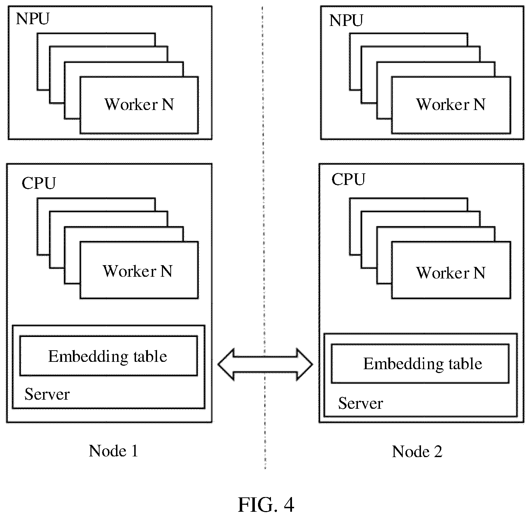

FIG. 2A, FIG. 2B, FIG. 3A, FIG. 3B, and FIG. 4 each are a schematic diagram of an application architecture according to this application. FIG. 2A is a schematic diagram of an architecture described from perspectives of training and inference of a recommendation system. FIG. 2B is a schematic diagram of an architecture of a distributed training system. FIG. 3A and FIG. 3B provide richer details for a hardware architecture of a node in the distributed training system. FIG. 4 provides richer details for a software architecture of the node in the distributed training system.

With reference to FIG. 2A, an embodiment provides a recommendation system architecture 200. A data collection device 260 is configured to collect a sample. One model parameter may include a plurality of pieces of feature information (or described as attribute information, for example, a user attribute and an item attribute), or may be an embedding embedding vector (for example, a first parameter and a second parameter in embodiments of this application) obtained based on feature information. There may be a plurality of types of feature information, and user feature information, object feature information, and a label feature may be specifically included. The user feature information represents a feature of a user, for example, a gender, an age, an occupation, and a hobby. The object feature information represents a feature of an object pushed to the user. Different recommendation systems correspond to different objects, and types of features that need to be extracted for different objects are different. For example, an object feature extracted from a model parameter of an app market may be a name (identifier), a type, a size, or the like of an app, and an object feature extracted from a model parameter of an e-commerce app may be a name of a commodity, a category to which the commodity belongs, a price range, or the like. The label feature indicates whether the sample is a positive example or a negative example. The label feature of the sample usually may be obtained based on information about an operation performed by the user on the recommended object. A sample in which the user performs an operation on the recommended object is a positive example, and a sample in which the user does not perform an operation on the recommended object or a sample browsed only is a negative example. For example, when the user taps, downloads, or purchases the recommended object, the label feature is 1, indicating that the sample is a positive example. If the user does not perform any operation on the recommended object, the label feature is 0, indicating that the sample is a negative example. The sample may be stored in a database 230 after being collected. Some or all feature information in the sample in the database 230 may be directly obtained from a client device 240, for example, user feature information, information (used to determine a type identifier) about an operation performed by a user on an object, and object feature information (for example, an object identifier).

A model parameter collected by the data collection device 260 may be stored in the database 230. The database 230 may be specifically a storage in a plurality of nodes. In this embodiment of this application, the storage may be a memory or an extended memory.

A distributed training system 220 trains a recommendation model 201 based on the sample in the database 230. The recommendation model 201 can be used to evaluate a large quantity of objects to obtain a score of each to-be-recommended object. Further, a specified or preset quantity of objects may be recommended from an evaluation result of the large quantity of objects. A calculation module 211 obtains a recommendation result based on the evaluation result of the recommendation model 201, and recommends the recommendation result to the client device through an I/O interface 212.

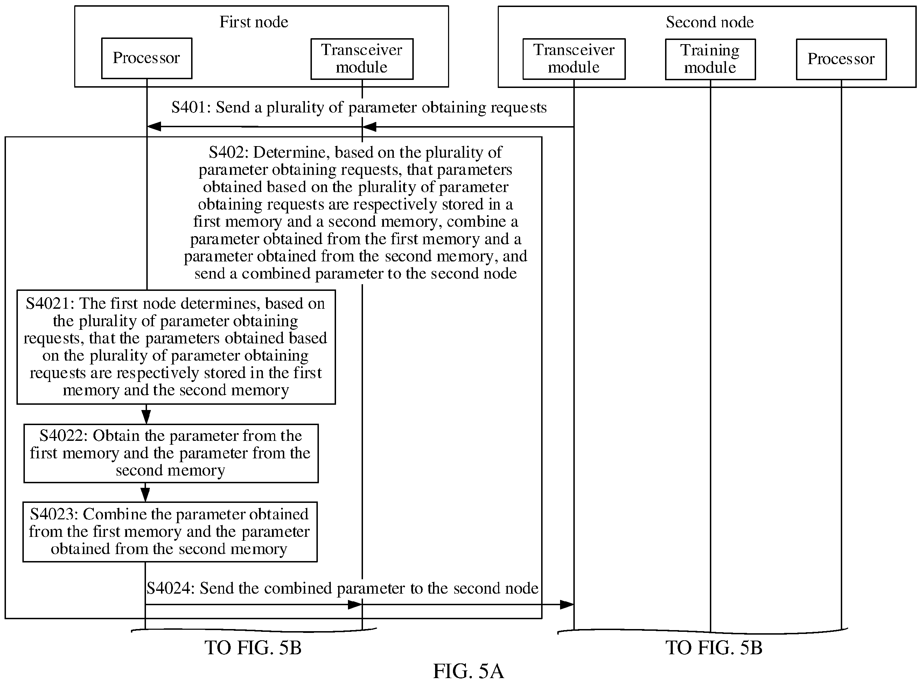

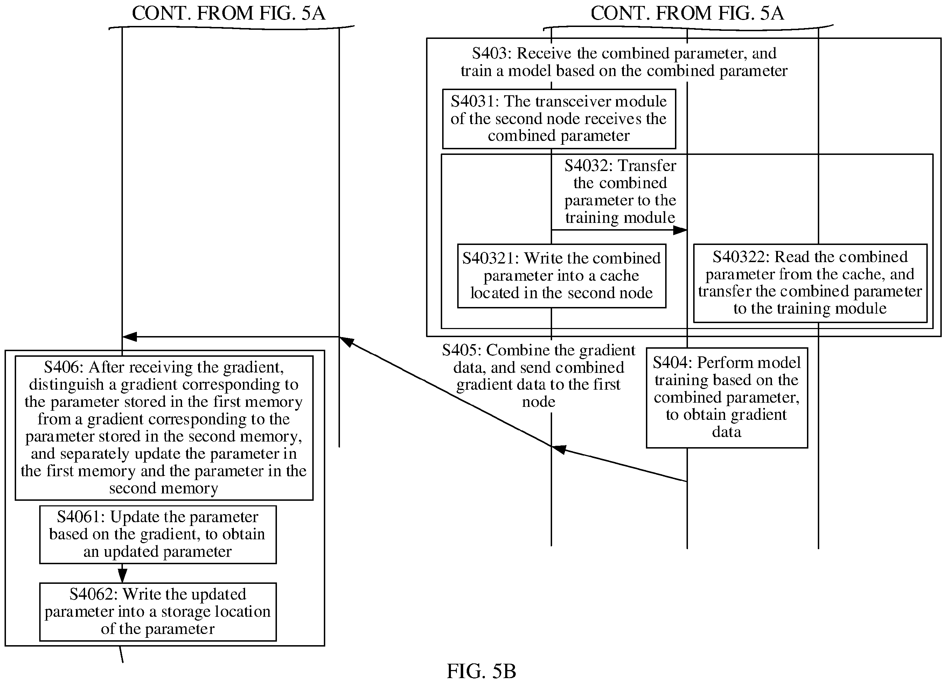

In this embodiment of this application, the distributed training system 220 may train the recommendation model by using a sample in a training set, to obtain a trained recommendation model. For implementation details of the calculation module 211, refer to the detailed descriptions of the method embodiment shown in FIG. 5A and FIG. 5B.

After obtaining the trained recommendation model 201 through training, the distributed training system 220 may send the recommendation model 201 to an execution device 210, or directly send a model parameter matrix to an execution device 210, to construct a recommendation model in the execution device 210 for recommendation of a corresponding system. For example, a recommendation model obtained through training based on a video-related sample may be used in a video website or an app to recommend a video to a user, and a recommendation model obtained through training based on an app-related sample may be used in an application market to recommend an app to a user.

The execution device 210 is provided with the I/O interface 212, to exchange data with an external device. The execution device 210 may obtain user feature information, for example, a user identifier, a user identity, a gender, an occupation, and a hobby, from the client device 240 through the I/O interface 212. This part of information may alternatively be obtained from a system database. The recommendation model 201 recommends a target to-be-recommended object to the user based on the user feature information and feature information of a to-be-recommended object. The execution device 210 may be disposed in a cloud server, or may be disposed in a user client.

The execution device 210 may invoke data, code, and the like in a data storage system 250, and may store output data in the data storage system 250. The data storage system 250 may be disposed in the execution device 210, may be independently disposed, or may be disposed in another network entity, and there may be one or more data storage systems 250.

The calculation module 211 processes the user feature information and the feature information of the to-be-recommended object by using the recommendation model 201. For example, the calculation module 211 analyzes and processes the user feature information and the feature information of the to-be-recommended object by using the recommendation model 201, to obtain a score of the to-be-recommended object, and ranks the to-be-recommended object based on the score. An object with a high ranking is used as an object recommended to the client device 240.

Finally, the I/O interface 212 returns the recommendation result to the client device 240 for presentation to the user.

With reference to FIG. 2B, the distributed training system 220 may include a plurality of nodes, and the database 230 may deploy training parameters in the plurality of nodes. During model training, one or more nodes in the plurality of nodes may perform model training by pulling a training parameter required for training from another node in a network node cluster, and back-propagate a gradient obtained after training to the another node, so that the another node updates the training parameter.

The following describes, based on FIG. 3A, an architectural diagram of a node 100 to which this application is applicable. The node 100 may be a node in the distributed training system described in FIG. 2B. It should be understood that the architecture described in FIG. 3A is merely an example for ease of understanding, and is not a limitation on an architecture that can be used by the node in this application. Another software part, for example, an operating system, and another hardware part, for example, a display, in the node 100 are not displayed.

The schematic diagram of the architecture of the node includes a hardware part. Specifically, the hardware includes the following:

Central processing unit (central processing unit, CPU) 1004 and memory management unit (Memory Management Unit, MMU) 1005: The central processing unit 1004 and the memory management unit 1005 are usually packaged into a chip. The CPU runs an application, and initiates a request for reading data or writing data. The request is also referred to as a memory access request below, that is, a request for accessing a storage medium, because an address in the storage medium (for example, a memory or extended memory) needs to be found for reading data or writing data. The MMU is responsible for address translation of the memory access request initiated by the CPU, that is, converting a virtual address in the memory access request into a physical address.

Memory (Memory) 1006: In FIG. 3A, the memory is used as an example to show the storage medium in the node, and a physical form of the memory may be a memory module. In the method of this application, in addition to being provided for a local instance (for example, a process) for use, the memory may be used by an instance of another node. A manner of using the memory by the instance of the another node is to request to write data into the memory, or request to read data from the memory. When the CPU 1004 reads data from and writes data into the memory 1006, a double rate (double data rate, DDR) bandwidth is occupied.

Extended memory component 1002: The extended memory component 1002 may include an extended chip and an extended memory. The extended chip may include a controller. For example, the controller may be a compute express link (compute express link, CXL) controller and a memory controller. The CXL controller is configured to lead out a CXL interface. The CXL interface may be connected to the CPU 1004. Optionally, the CXL interface may be connected to the CPU 1004 through a PCIe edge connector. A physical layer of a CXL bus is compatible with that of a PCIe bus. Therefore, the extended memory component 1002 may use a PCIe slot in a server chassis as a PCIe device, without requiring an additional communication cable.

The extended memory is hardware that is based on a CXL protocol (or a CXL-like protocol), that is inserted into the PCIe slot, and that has a function similar to that of the memory, and does not have a persistence characteristic, and an internal medium is a DRAM. Therefore, the extended memory may be considered as an extension of a DDR DRAM. A bandwidth of the extended memory depends on a bandwidth in a PCIe protocol (PCIe 5.0: 128 GB/s), and a delay is approximately 350 ns. The delay is slightly higher than a read/write delay in DDR, and the bandwidth is slightly lower than a bandwidth in DDR.

The CPU 1004 is connected to the extended chip through the CXL interface, and the extended chip is connected to the extended memory through the memory controller in the extended chip, so that the CPU 1004 is connected to the extended memory, to implement memory expansion in the node.

Training module 1001: The training module 1001 may be an AI training card such as a neural network processing unit (neural network processing unit, NPU), a graphics processing unit (graphics processing unit, GPU), or a tensor processing unit (tensor processing unit, TPU).

Although the node 100 in the architecture shown in FIG. 3A includes the training module 1001, for a node configured to store a model parameter, the training module 1001 may not be included, as shown in FIG. 3B.

Transceiver module 1003: The transceiver module 1003 may be a network interface card based on an interconnection protocol between physical machines. The interconnection protocol between physical machines may be RoCE, IB, TCP, CXL, or the like. The CPU 1004 may control the transceiver module 1003 to transmit data to another computing node through a network, and the transceiver module 1003 may receive data transmitted from the another node.

FIG. 4 is a schematic diagram of a software architecture of a node cluster.

As shown in FIG. 4, a software form of each node may include a plurality of workers and a plurality of servers (only one is shown in FIG. 4). Both the worker and the server are independent processes. Each worker is mainly configured to train and infer related model data, and each server is configured to store a model parameter (for example, an embedding table shown in FIG. 4).

Corresponding to corresponding hardware, each worker includes a training module, configured to be responsible for data training and inference. Each server mainly runs on a CPU. In this embodiment of this application, the embedding table in the server may be placed in a memory or an extended memory, and some other data such as a calculation parameter in an optimizer may also be placed in the memory or the extended memory.

In actual application, an iterative training process of a model includes two processes: forward propagation and back propagation. The forward propagation process is to input the model parameter into the to-be-trained model to obtain a processing result of the to-be-trained model. The processing result may be used to determine an update gradient corresponding to the model parameter. The back propagation process is to update the model based on the update gradient corresponding to the model parameter.

More specifically, a node (for example, a second node in embodiments of this application) responsible for forward propagation may obtain the model parameter from a node (for example, a first node in embodiments of this application) that stores the model parameter, obtain the update gradient based on the model parameter, and back-propagate the update gradient to the node that stores the model parameter, so that the node that stores the model parameter obtains an updated model parameter based on the update gradient, and replaces the model parameter stored before update with the updated model parameter.

A process in which the node responsible for forward propagation obtains the model parameter may be referred to as a data pull (pull) process, a process in which the node responsible for forward propagation obtains the update gradient based on the model parameter may be referred to as a training (training) process, and a process in which the update gradient is back-propagated to the node that stores the model parameter may be referred to as a data push (push) process.

For ease of understanding, the following separately describes in detail the data pull (pull) process, the training (training) process, and the data push (push) process with reference to the accompanying drawings.

In an existing implementation, all model parameters are deployed in a memory (for example, a dynamic random access memory (dynamic random access memory, DRAM)) of a node. When a node responsible for forward propagation obtains the model parameter from another node responsible for storage, a DDR bandwidth needs to be occupied. Consequently, DDR bandwidth congestion is caused.

Specifically, in a case, when a model parameter required for current model iteration is stored in a memory located in a remote node of a training module (for example, the training module and the memory are located in different nodes), a processor in a node (a node in which the training module is located) may indicate a processor in the remote node (a node in which the model parameter required for current model iteration is stored) to obtain the model parameter required for current model iteration, the processor in the remote node may read the model parameter required for current model iteration from a corresponding storage location in the memory by using DDR, write the data into a cache (storage space belonging to the memory) by using DDR, and transfer the data to a transceiver module (for example, a network interface card), and the transceiver module may transfer the data to the node in which the training module is located. That is, a DDR bandwidth needs to be occupied regardless of whether the processor in the remote node reads the model parameter from the memory or writes the model parameter into the cache.

Specifically, in a case, the node responsible for forward propagation may include a training module. The training module may be a processor that has an AI processing capability, for example, a CPU, an NPU, or a GPU. In an implementation, when a model parameter required for current model iteration is stored in a local memory of the training module (for example, the training module and the memory are located in a same node), a processor (for example, a CPU) in the node may read the model parameter required for current model iteration from a corresponding storage location in the memory by using DDR, write the data into a cache (storage space belonging to the memory) by using DDR, and transfer the data to the training module. That is, a DDR bandwidth needs to be occupied regardless of whether the processor obtains the model parameter from the memory or writes the model parameter into the cache.

In embodiments of this application, some model parameters may be stored in memories (for example, a first memory and a second memory in this application) that communicate with a processor according to different protocols. When the processor reads data from and writes data into the second memory, a peripheral component interconnect express (peripheral component interconnect express, PCIe) bandwidth is occupied, to reduce occupation of a DDR bandwidth.

FIG. 5A and FIG. 5B are a schematic flowchart of a model training method according to an embodiment of this application. The method may be applied to the network architectures shown in FIG. 2 to FIG. 4, or may be applied to another network architecture. As shown in FIG. 5A and FIG. 5B, the method may specifically include the following steps.

S401: A second node in a plurality of nodes is configured to send a plurality of parameter obtaining requests to a first node, where the plurality of parameter obtaining requests are used to obtain parameters required by the second node to train a model.

In some scenarios, there are a very large quantity of model parameters that need to be updated. Therefore, the large quantity of model parameters may be stored in the plurality of nodes. During model training, a node responsible for performing forward propagation needs to obtain a model parameter required for a current batch from the plurality of nodes.

A recommendation model is used as an example. The model parameter may be an embedding vector (embedding) corresponding to a user or an item. The recommendation model may determine, based on the embedding vector of the user and embedding vectors of a plurality of items, a specific item, in the plurality of items, to be recommended to the user.

The following separately describes the embedding vector corresponding to the user or the item.

In a possible implementation, embedding processing may be performed on attribute information of the user by using an embedding layer, to obtain the embedding vector of the user, and embedding processing may be performed on attribute information of the item by using the embedding layer, to obtain the embedding vector of the item.

The attribute information of the user may be an attribute related to a preference feature of the user, and is at least one of a gender, an age, an occupation, income, a hobby, and an education level. The gender may be a male or a female, the age may be a number ranging from 0 to 100, the occupation may be a teacher, a programmer, a chef, or the like, the hobby may be basketball, tennis, running, or the like, and the education level may be a primary school, a middle school, a high school, a university, or the like. A specific type of the attribute information of the user is not limited in this application.

The item may be a physical item or a virtual item, for example, may be an item such as an application (application, app), audio/video, a web page, and news. The attribute information of the item may be at least one of an item name, a developer, an installation package size, a category, and a degree of praise. For example, the item is an application. The category of the item may be a chat category, a running game, an office category, or the like, and the degree of praise may be a score and a comment made on the item, or the like. A specific type of the attribute information of the item is not limited in this application.

In a possible implementation, the model parameter (for example, the embedding vector of the user and the item, or may further include another model parameter) may be stored in a corresponding node.

In a model parameter deployment phase, model parameters corresponding to the to-be-trained model may be deployed in a node cluster. Specifically, an amount proportion of data placed in each node may be adjusted based on requirements of a service and the model.

For example, some parameters of the model may be deployed in the first node. Specifically, the some parameters of the model may be respectively stored in a first memory and a second memory of the first node. The first node may be the remote node described above.

In a possible implementation, the first memory and the second memory communicate with a processor in the first node according to different protocols. For example, the first memory may communicate with the processor according to a DDR protocol, and the second memory may communicate with the processor according to a CXL protocol. When the processor reads data from or writes data into the first memory, a DDR bandwidth is occupied. When the processor reads data from or writes data into the second memory, a PCIe bandwidth is occupied.

In a possible implementation, the second node may determine that a model parameter required for a current model training iteration round is stored in the first node. Specifically, when a processor in the second node determines that a first parameter required for the current model training iteration round is stored in a memory of the first node, and a second parameter required for the current model training iteration round is stored in an extended memory of the first node, the second node may perform step S401. S401 is specifically as follows: The second node sends the plurality of parameter obtaining requests to the first node, where the plurality of parameter obtaining requests are used to obtain the parameters required by the second node to train the model.

Specifically, the second node may send a plurality of sample obtaining requests to a transceiver module (for example, a network interface card) of the first node, and the transceiver module of the first node may notify the processor of content in the plurality of sample obtaining requests.

S402: The first node determines, based on the plurality of parameter obtaining requests, that the parameters obtained based on the plurality of parameter obtaining requests are respectively stored in the first memory and the second memory, combines a parameter obtained from the first memory and a parameter obtained from the second memory, and sends a combined parameter to the second node.

In a possible implementation, step S402 may specifically include step S4021, step S4022, step S4023, and step S4024. Step S4021 is specifically as follows: The first node determines, based on the plurality of parameter obtaining requests, that the parameters obtained based on the plurality of parameter obtaining requests are respectively stored in the first memory and the second memory. Step S4022 is specifically: obtaining the parameter from the first memory and the parameter from the second memory. Step S4023 is specifically: combining the parameter obtained from the first memory and the parameter obtained from the second memory. Step S4024 is specifically: sending the combined parameter to the second node. The following separately provides descriptions.

In a possible implementation, the plurality of parameter obtaining requests may include a virtual address of data (that is, some parameters of the model) that needs to be obtained by the processor. The first node may maintain a corresponding storage page table. The storage page table may include a mapping relationship between a virtual address and a physical address of data, and the physical address is an address of storage space for storing the data.

In a possible implementation, the plurality of parameter obtaining requests may include an identifier of indicated data (that is, some parameters of the model). The first node may maintain a corresponding storage page table. The storage page table may include a mapping relationship between an identifier and a virtual address of data, and the virtual address corresponds to a physical address of storage space of the data. Based on the page table, the processor in the first node may determine a virtual address corresponding to the some parameters of the model indicated in the requests.

In a possible implementation, some parameter requests in the plurality of parameter obtaining requests are used to obtain a parameter stored in the first memory of the first node (for ease of description, in this embodiment of this application, the parameter stored in the first memory may be referred to as the first parameter, and the first parameter may include one or more parameters of the model), and the other parameter requests in the plurality of parameter obtaining requests are used to obtain a parameter stored in the second memory of the first node (for ease of description, in this embodiment of this application, the parameter stored in the second memory may be referred to as the second parameter, and the second parameter may include one or more parameters of the model). Therefore, the processor may determine, based on the plurality of parameter obtaining requests, that the parameters obtained based on the plurality of parameter obtaining requests are respectively stored in the first memory and the second memory.

After performing step S4021 (the first node determines, based on the plurality of parameter obtaining requests, that the parameters obtained based on the plurality of parameter obtaining requests are respectively stored in the first memory and the second memory), the first node may perform step S4022 (obtain the parameter from the first memory and the parameter from the second memory).

For example, the parameters obtained based on the plurality of parameter obtaining requests are the first parameter (located in the first memory) and the second parameter (located in the second memory).

In a possible implementation, the processor in the first node may read the first parameter from the first memory of the first node. Specifically, the processor in the first node may read the first parameter from a corresponding storage location in the first memory of the first node based on a virtual address of the first parameter.

In a possible implementation, when the processor in the first node reads the first parameter from the corresponding storage location in the first memory of the first node based on the virtual address of the first parameter, the virtual address corresponding to the first parameter may be used to determine a physical address of the first parameter in the first memory of the first node (the mapping process may be implemented through translation by a memory controller, and details are not described herein).

In a possible implementation, the processor in the first node may read the second parameter from the second memory of the first node. Specifically, the processor in the first node may read the second parameter from a corresponding storage location in the second memory of the first node based on a virtual address of the second parameter.

In a possible implementation, when the processor in the first node reads the second parameter from the corresponding storage location in the second memory of the first node based on the virtual address of the second parameter, the virtual address corresponding to the second parameter may be used to determine a physical address of the second parameter in the second memory of the first node (the mapping process may be implemented through translation by the memory controller, and details are not described herein), and the virtual address corresponding to the second parameter may be used to determine the physical address of the second parameter in the second memory of the first node.

For example, the first memory may communicate with the processor according to the DDR protocol, and the second memory may communicate with the processor according to the CXL protocol. The processor in the first node may read the first parameter based on a DDR line, and the processor in the first node may read the second parameter based on a CXL or CXL-like line. CXL and DDR are two completely different data lines. CXL is based on PCIe, DDR is based on a memory controller of a CPU, and no mutual impact is imposed on a bandwidth.

In this embodiment of this application, the model parameter is stored in the extended memory of the first node. When data is read from the extended memory, no DDR bandwidth is occupied, to reduce occupation of the DDR bandwidth. In addition, due to limited storage space of the memory, in a scenario in which a quantity of parameters of the model such as the recommendation model is excessively large, a quantity of nodes storing the model parameter may be reduced by storing the model parameter in the extended memory.

In a possible implementation, after obtaining the parameter from the first memory and the parameter from the second memory, the processor may perform step S4023 (combine the parameter obtained from the first memory and the parameter obtained from the second memory).

Parameters to be combined may be parameters required for an iteration process of the model, or the processor may combine obtained parameters at an interval of a specific time, or the processor may combine obtained parameters each time after a specific quantity of parameters are obtained.

The combination herein may be understood as writing the read parameters into one or more segments of continuous storage space in a cache.

In a possible implementation, the cache may be storage space provided by the first memory, may be storage space provided by the second memory, or may be storage space provided by both the first memory and the second memory.

The first parameter may be one or more embeddings, and the second parameter may be one or more embeddings. When the first parameter is a plurality of embeddings, the plurality of embeddings in the first parameter may be aggregated and written into the cache. The plurality of embeddings in the first parameter occupy continuous storage space in the cache. When the second parameter is a plurality of embeddings, the plurality of embeddings in the second parameter may be aggregated and written into the cache. The plurality of embeddings in the second parameter occupy continuous storage space in the cache.

In a possible implementation, step S4023 may be specifically as follows: The processor in the first node writes the first parameter into the second memory of the first node, and writes the second parameter into the first memory of the first node. Alternatively, S4023 is specifically as follows: The processor in the first node writes the first parameter into the first memory of the first node, and writes the second parameter into the second memory of the first node. Alternatively, S4023 is specifically as follows: The processor in the first node writes the first parameter into the first memory of the first node, and writes the second parameter into the second memory of the first node.

In a possible implementation, the first memory is a memory, and the second memory is an extended memory. Data is read from or written into the second memory based on the CXL protocol. It is specified in the protocol that a CXL-related packet header needs to be carried during data reading and data writing, and a delay during reading and writing is higher than that in DDR.

Compared with a manner of caching the parameter obtained from the first memory into the first memory, the manner of caching the parameter obtained from the first memory into the second memory may reduce occupation of a DDR bandwidth in a write process.

Compared with a manner of caching the parameter obtained from the second memory into the second memory, the manner of caching the parameter obtained from the second memory into the first memory may reduce a data transmission delay.

The parameter obtained from the first memory and the parameter obtained from the second memory are combined and then cached into the first memory, so that a data transmission delay may be reduced.

The parameter obtained from the first memory and the parameter obtained from the second memory are combined and then cached into the second memory, so that occupation of a DDR bandwidth in a write process may be reduced.

In a possible implementation, the processor in the first node may further perform step S4024. Step S4024 is specifically as follows: The first node sends the combined parameter to the second node.

Step S4024 may specifically include: Step S40241: The processor in the first node indicates the transceiver module of the first node to read the combined parameter from a cache of the first node. The indication may carry an address of the stored combined parameter in the cache. Step S40242: The transceiver module of the first node reads the combined parameter from the cache of the first node. Step S40243: The transceiver module of the first node sends the combined parameter to the second node.

In this embodiment of this application, the parameter obtained from the first memory and the parameter obtained from the second memory are combined and then sent. In particular, in a scenario in which a large quantity of parameters need to be transferred between nodes such as nodes for training of a recommendation model, a quantity of transmitted packets may be greatly reduced, to improve data transmission efficiency.

In a possible implementation, the processor in the first node may trigger the transceiver module of the first node to obtain the first parameter and the second parameter, and send the first parameter and the second parameter to the second node, for example, to a transceiver module of the second node. Optionally, the transceiver module may be a network interface card.

Specifically, the transceiver module may send the first parameter and the second parameter to the second node by using remote direct memory access (remote direct memory access, RDMA), CXL, or another high-speed transmission protocol.

A single model parameter usually has a small size, and usually includes only several bytes or hundreds of bytes. If the transceiver module directly sends a packet carrying a single model parameter to a receiving module of the second node, transmitted packet header data may be larger than a model parameter that actually needs to be transmitted. In addition, for a slightly larger model, millions of model parameters need to be pulled each time. Therefore, excessive packet transmission brings great request pressure to the network interface card. In this embodiment, packet data may be sent to the second node, and the first parameter and the second parameter share a same packet header in the packet data (that is, combined and then sent), so that a data size of a packet and a quantity of packets sent during data pull can be reduced.

Step S403: The second node receives the combined parameter, and trains the model based on the combined parameter.

In a possible implementation, step S403 may include: step S4031: The transceiver module of the second node receives the first parameter and the second parameter, and step S4032: The first parameter and the second parameter are transferred to a training module. For example, step S4032 may specifically include step S40321 and step S40322. Step S40321 is specifically as follows: The transceiver module of the second node writes the first parameter and the second parameter into a cache located in the second node. Step S40322 is specifically as follows: The processor in the second node may read the first parameter and the second parameter from the cache, and transfer the first parameter and the second parameter to the training module of the second node.

Optionally, after obtaining the first parameter and the second parameter, the training module may perform step S404: The training module may perform a training process of the to-be-trained model based on the first parameter and the second parameter, to obtain an update gradient corresponding to the first parameter and an update gradient corresponding to the second parameter, or directly obtain an updated first parameter and an updated second parameter.

In a possible implementation, after obtaining the first parameter and the second parameter, the second node may transfer the first parameter and the second parameter to a training module, and the training module may obtain an update gradient corresponding to the first parameter and an update gradient corresponding to the second parameter based on the first parameter and the second parameter.

In a possible implementation, the processor in the second node may write the update gradient corresponding to the first parameter and the update gradient corresponding to the second parameter, or the updated first parameter and the updated second parameter into a cache located in a memory, and the processor in the second node indicates the transceiver module of the second node to read the update gradient corresponding to the first parameter and the update gradient corresponding to the second parameter, or the updated first parameter and the updated second parameter from the cache in the memory. The transceiver module of the second node may perform step S405: Combine the gradient corresponding to the first parameter and the gradient corresponding to the second parameter, and send a combined gradient to the first node.

To enable the first node to know a previous model parameter corresponding to a gradient or updated data sent by the second node, a correspondence between the gradient or the updated data and a corresponding virtual address or identifier may be carried in the packet data.

In a possible implementation, gradients or updated data for a same node may be placed in same packet data, and the packet data is sent by the transceiver module of the second node to the transceiver module of the first node, to reduce a data size of a packet and a quantity of packets sent during data pull.

Optionally, the method may further include step S406: After receiving the gradient, the first node distinguishes a gradient corresponding to the parameter stored in the first memory from a gradient corresponding to the parameter stored in the second memory, and separately updates the parameter in the first memory and the parameter in the second memory.

The update herein may include updating the parameter based on the gradient, and writing an updated parameter into a corresponding storage location in the memory. That is, S406 may include step S4061 and step S4062.

Specifically, step S4061 is specifically as follows: The processor (for example, may be an optimizer included in the processor) in the first node may update the first parameter based on the update gradient corresponding to the first parameter, to obtain the updated first parameter, and the processor in the first node may update the second parameter based on the update gradient corresponding to the second parameter, to obtain the updated second parameter.

Step S4062 is specifically as follows: The processor in the first node may write the updated first parameter into a storage location of the first parameter, and the processor in the first node may write the updated second parameter into a storage location of the second parameter.

The following describes the model training method in embodiments of this application with reference to a specific example.

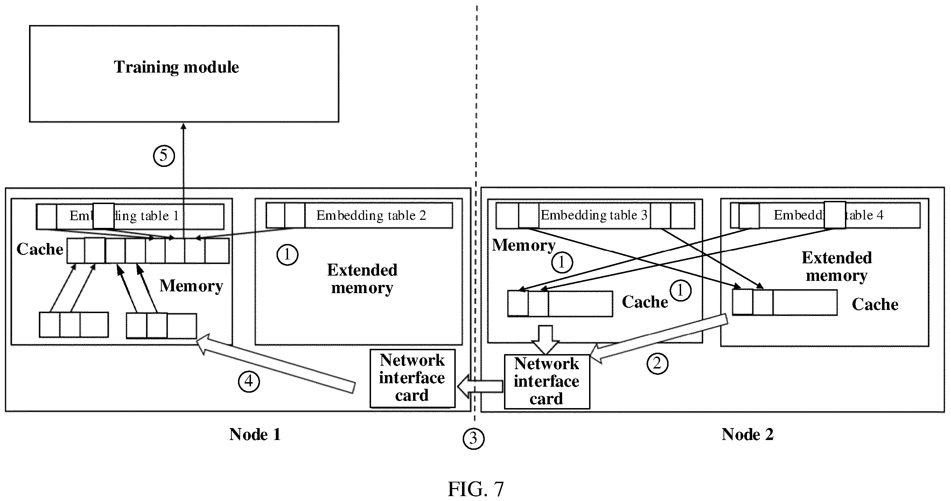

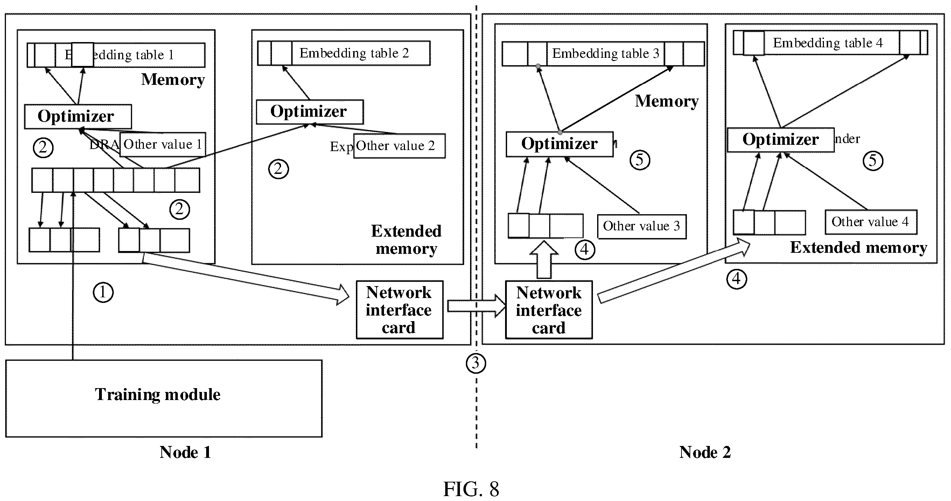

FIG. 7 shows a model parameter pull (pull) procedure in a model training process, and FIG. 8 shows a training (training) procedure and a data push (push) procedure in the model training process. In FIG. 7 and FIG. 8, an example in which a model parameter is an embedding (embedding) vector is used for description.

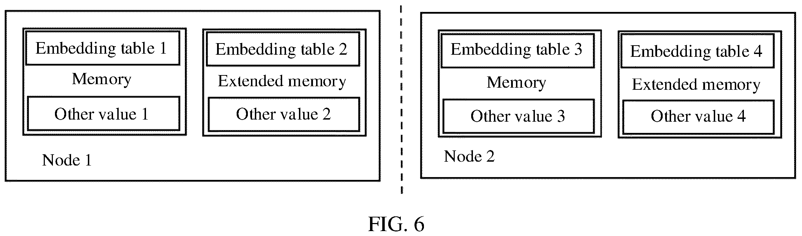

In a model parameter deployment phase, embedding data and other value (other value) may be deployed in memories DRAMs and extended memories (Memory Expander) of different physical nodes. All of the data is placed in a virtual address requested by a server process, and a proportion of placed data may be adjusted according to requirements of a service and a model. For a schematic deployment diagram of the model parameter, refer to FIG. 6.

FIG. 7 is used as an example. A training module of a node 1 is used as a training initiator. In a data pull process, model parameters (data in an embedding table 1 and data in an embedding table 2) required for a current model training round are copied in a local memory on the node 1 ("copied" may be understood as "read" and "written"). The copy herein is classified into two forms: copy from a memory to a cache in the memory and copy from an extended memory to a memory. In the former form, a DDR bandwidth is used during reading and writing. In the latter form, a PCIe bandwidth is used during data reading, and a DDR bandwidth is used during writing.

In the data pull process, model parameters (data in an embedding table 3 and data in an embedding table 4) required for the current model training round and the data in the embedding table 4 are aggregated on a node 2 and copied to an extended memory, and data in the extended memory is aggregated and copied to a memory, to form a continuous buffer in each of the extended memory and the memory. Herein, the data is separately placed, to balance copy delays and bandwidth pressure of PCIe and DDR, so as to optimize an overall delay and bandwidth.

The node 2 sends data in the buffer to the memory of the node 1 through a network interface card or the like. The node 1 may send the data to the training module by sharing a memory buffer, to start a training procedure.

FIG. 8 shows a data push (push) procedure. The training module sends data (for example, an update gradient) to the memory, and the data needs to be transferred to a destination end. If the destination end is in the node 1, the data and the other value are placed in an optimizer together to perform an operation. The embedding tables and the other value may exist in a same type of hardware, or may not exist in a same type of hardware. Occupation of the DDR bandwidth and the PCIe bandwidth may be balanced based on an actual situation.

If the destination end is in the node 2, aggregated data in the node 1 is sent to the node 2 through a network interface card.

After receiving the model parameters, the node 2 separately places the model parameters in the memory or the extended memory based on an address requirement. The model parameters are placed in an optimizer to perform an operation, and after the operation is completed, are distributed to the embedding tables to complete the procedure.

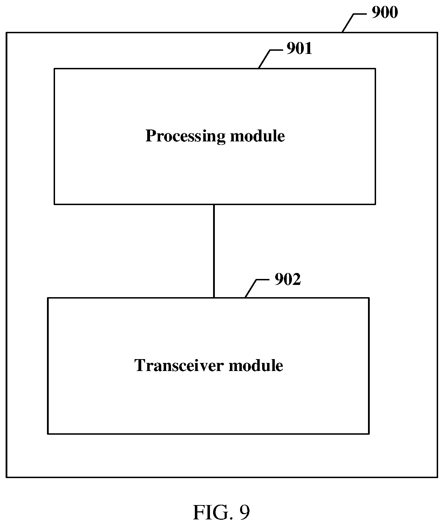

The foregoing describes, with reference to FIG. 1 to FIG. 8, in detail the model training method provided in this application. The following describes, with reference to FIG. 9, a model training apparatus provided in this application.

FIG. 9 is a schematic diagram of a structure of a model training apparatus according to this application. As shown in FIG. 9, the apparatus is used in a first node, and the apparatus 900 includes a processor 901 and a transceiver module 902.

The processor 901 is configured to: receive a plurality of parameter obtaining requests, where the plurality of parameter obtaining requests are used to obtain parameters required by a second node to train a model; and determine, based on the plurality of parameter obtaining requests, that the parameters obtained based on the plurality of parameter obtaining requests are respectively stored in a first memory and a second memory, and combine a parameter obtained from the first memory and a parameter obtained from the second memory.

The transceiver module 902 is configured to send a combined parameter to the second node.

In a possible implementation, when the first node is configured to combine the parameter obtained from the first memory and the parameter obtained from the second memory, the processor 901 is specifically configured to:
cache both the parameter obtained from the first memory and the parameter obtained from the second memory into the first memory for combination.

In a possible implementation, when the first node is configured to combine the parameter obtained from the first memory and the parameter obtained from the second memory, the processor 901 is specifically configured to:
cache both the parameter obtained from the first memory and the parameter obtained from the second memory into the second memory for combination.

In a possible implementation, when the first node is configured to combine the parameter obtained from the first memory and the parameter obtained from the second memory, the processor 901 is specifically configured to:
cache the parameter obtained from the first memory into the second memory, and cache the parameter obtained from the second memory into the first memory.

In a possible implementation, the first memory is connected to the processor according to a DDR protocol, the second memory is an extended memory, and the second memory is connected to the processor according to a compute express link CXL protocol.

In a possible implementation, the model is a recommendation model; and the parameter is an embedding embedding vector.

The model training apparatus 900 shown in FIG. 9 corresponds to the first node in the model training method in the embodiment shown in FIG. 5A and FIG. 5B. Therefore, for a function and technical effects of the model training apparatus 900, refer to the related descriptions in the embodiment shown in FIG. 5A and FIG. 5B. Details are not described herein.

In addition, an embodiment of this application further provides a computer-readable storage medium. The computer-readable storage medium stores instructions. When the instructions are run on a computing node, the computing node is enabled to perform the model training method in the foregoing embodiments.

In addition, an embodiment of this application further provides a computer program product. When the computer program product is executed by a model training apparatus, one or more model training apparatuses perform any one of the foregoing model training methods. The computer program product may be a software installation package. When any one of the foregoing model training methods needs to be used, the computer program product may be downloaded, and the computer program product may be executed on a computer.

In addition, it should be noted that the apparatus embodiments described above are merely examples. The units described as separate parts may or may not be physically separate, and parts displayed as units may or may not be physical units, may be located at one position, or may be distributed on a plurality of network units. Some or all of the modules may be selected based on actual requirements to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

The terms "first", "second", and the like in the specification, the claims, and the accompanying drawings of this application are used to distinguish between similar objects, and are not necessarily used to describe a specific order or sequence. It should be understood that the terms used in such a manner are interchangeable in proper situations, and this is merely a distinguishing manner used when objects with a same attribute are described in embodiments of this application.

Based on the descriptions of the foregoing implementations, a person skilled in the art may clearly understand that this application may be implemented by software in addition to necessary universal hardware, or certainly, may be implemented by dedicated hardware, including a dedicated integrated circuit, a dedicated CPU, a dedicated storage, a dedicated component, and the like. Usually, any function performed by a computer program can be easily implemented through corresponding hardware. In addition, a specific hardware structure used to implement a same function may be in various forms, for example, in a form of an analog circuit, a digital circuit, or a dedicated circuit. However, for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented through software, hardware, firmware, or any other combination. When software is used for implementation, all or some of the foregoing embodiments may be implemented in a form of a computer program product. The computer program product includes one or more computer instructions. When the computer program instructions are loaded or executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by a computer, or a data storage device, for example, a server or a data center, that includes one or more usable medium sets. The usable medium may be a magnetic medium (for example, a floppy disk, a hard disk, or a magnetic tape), an optical medium (for example, a DVD), or a semiconductor medium. The semiconductor medium may be a solid state drive (solid state drive, SSD).

The foregoing descriptions are merely specific implementations of this application, but the protection scope of this application is not limited thereto. Any modification or replacement readily figured out by a person skilled in the art within the technical scope disclosed in this application shall fall within the protection scope of this application. Therefore, the protection scope of this application shall be subject to the protection scope of the claims.

**Claims**

**1.** A model training system, wherein the model training system comprises a plurality of nodes, and parameters required for training the model are distributed in the plurality of nodes;

a first node in the plurality of nodes comprises a first memory and a second memory, the first memory and the second memory respectively store some parameters of the model, and the first memory and the second memory communicate with a processor in the first node according to different protocols;

a second node in the plurality of nodes is configured to send a plurality of parameter obtaining requests to the first node, wherein the plurality of parameter obtaining requests are used to obtain parameters required by the second node to train the model;

the first node is configured to: determine, based on the plurality of parameter obtaining requests, that the parameters obtained based on the plurality of parameter obtaining requests are respectively stored in the first memory and the second memory, combine a parameter obtained from the first memory and a parameter obtained from the second memory, and send a combined parameter to the second node; and

the second node is further configured to: receive the combined parameter, and train the model based on the combined parameter.

2. The system according to claim 1, wherein when the first node is configured to combine the parameter obtained from the first memory and the parameter obtained from the second memory, the first node is specifically configured to: cache both the parameter obtained from the first memory and the parameter obtained from the second memory into the first memory for combination.

3. The system according to claim 1, wherein when the first node is configured to combine the parameter obtained from the first memory and the parameter obtained from the second memory, the first node is specifically configured to: cache both the parameter obtained from the first memory and the parameter obtained from the second memory into the second memory for combination.

4. The system according to claim 1, wherein when the first node is configured to combine the parameter obtained from the first memory and the parameter obtained from the second memory, the first node is specifically configured to: cache the parameter obtained from the first memory into the second memory, and cache the parameter obtained from the second memory into the first memory.

5. The system according to any one of claims 1 to 4, wherein the second node is further configured to: after receiving the combined parameter, rank the combined parameter and a parameter received from another node, and then train the model based on the ranked parameters.

6. The system according to any one of claims 1 to 5, wherein the second node is further configured to:

after completing training of the model, obtain gradient data generated after the model is trained, and determine gradients corresponding to parameters in the first node based on the gradient data; and

combine the gradients corresponding to the parameters in the first node, and then send a combined gradient to the first node; and

the first node is configured to:

after receiving the gradient, distinguish a gradient corresponding to the parameter stored in the first memory from a gradient corresponding to the parameter stored in the second memory, and separately update the parameter in the first memory and the parameter in the second memory.

7. The system according to any one of claims 1 to 6, wherein the first memory is connected to the processor according to a DDR protocol, the second memory is an extended memory, and the second memory is connected to the processor according to a compute express link CXL protocol.

8. The system according to any one of claims 1 to 7, wherein the model is a recommendation model; and the parameter is an embedding embedding vector.

9. A model training method, applied to a distributed training system, wherein the distributed training system comprises a plurality of nodes, and parameters required for training the model are distributed in the plurality of nodes; and a first node in the plurality of nodes comprises a first memory and a second memory, the first memory and the second memory respectively store some parameters of the model, and the first memory and the second memory communicate with a processor in the first node according to different protocols; and the method comprises:

sending, by a second node in the plurality of nodes, a plurality of parameter obtaining requests to the first node, wherein the plurality of parameter obtaining requests are used to obtain parameters required by the second node to train the model;

determining, by the first node based on the plurality of parameter obtaining requests, that the parameters obtained based on the plurality of parameter obtaining requests are respectively stored in the first memory and the second memory, combining a parameter obtained from the first memory and a parameter obtained from the second memory, and sending a combined parameter to the second node; and

receiving, by the second node, the combined parameter, and training the model based on the combined parameter.

10. The method according to claim 9, wherein the combining a parameter obtained from the first memory and a parameter obtained from the second memory comprises:

caching both the parameter obtained from the first memory and the parameter obtained from the second memory into the first memory for combination.

11. The method according to claim 9, wherein the combining a parameter obtained from the first memory and a parameter obtained from the second memory comprises:

caching both the parameter obtained from the first memory and the parameter obtained from the second memory into the second memory for combination.

12. The method according to claim 9, wherein the combining a parameter obtained from the first memory and a parameter obtained from the second memory comprises:

caching the parameter obtained from the first memory into the second memory, and caching the parameter obtained from the second memory into the first memory.

13. The method according to any one of claims 9 to 12, wherein the method further comprises:

after receiving the combined parameter, ranking, by the second node, the combined parameter and a parameter received from another node, and then training the model based on the ranked parameters.

14. The method according to any one of claims 9 to 13, wherein the method further comprises:

after completing training of the model, obtaining, by the second node, gradient data generated after the model is trained, and determining gradients corresponding to parameters in the first node based on the gradient data; and combining the gradients corresponding to the parameters in the first node, and then sending a combined gradient to the first node; and

after receiving the gradient, distinguishing, by the first node, a gradient corresponding to the parameter stored in the first memory from a gradient corresponding to the parameter stored in the second memory, and separately updating the parameter in the first memory and the parameter in the second memory.

15. The method according to any one of claims 9 to 14, wherein the first memory is connected to the processor according to a DDR protocol, the second memory is an extended memory, and the second memory is connected to the processor according to a compute express link CXL protocol.

16. The method according to any one of claims 9 to 15, wherein the model is a recommendation model; and

the parameter is an embedding embedding vector.

17. A computing node, wherein the computing node comprises a processor and a storage, the storage stores program instructions, and the processor runs the program instructions to perform the steps performed by the processor and the training module in the method according to any one of claims 9 to 16.

18. A computer-readable storage medium, wherein the computer-readable storage medium stores instructions, and when the instructions are run on a computing node, the computing node is enabled to perform the method according to any one of claims 9 to 16.

19. A computer program product comprising instructions, wherein when the computer program product runs on a computing node, the computing node is enabled to perform the method according to any one of claims 9 to 16.

FIG. 1

EP 4 542 449 A1

Data collection device 260

Data stream

100

Database 230

Distributed training system 220

Data stream

Execution device 210

Client device 240

Input data

I/O interface 212

Recommendation model 201

Calculation module 211

Data storage system 250

Output a result

FIG. 2A

FIG. 2B

Node 100

Central processing
unit 1004

Memory
management
unit 1005

DDR

Memory 1006

CXL

Training
module 1001

Extended
memory
component
1002

Transceiver
module 1003

FIG. 3A

Node 100

Central processing
unit 1004

Memory
management
unit 1005

DDR

Memory
1006

CXL

Extended
memory
component
1002

Transceiver
module 1003

FIG. 3B

NPU

Worker N

NPU

Worker N

CPU

Worker N

Embedding table

Server

CPU

Worker N

Embedding table

Server

Node 1

Node 2

FIG. 4

| First node | | | | Second node | | |
|---|---|---|---|---|---|---|

Processor | Transceiver module | | Transceiver module | Training module | Processor

S401: Send a plurality of parameter obtaining requests

S402: Determine, based on the plurality of parameter obtaining requests, that parameters obtained based on the plurality of parameter obtaining requests are respectively stored in a first memory and a second memory, combine a parameter obtained from the first memory and a parameter obtained from the second memory, and send a combined parameter to the second node

S4021: The first node determines, based on the plurality of parameter obtaining requests, that the parameters obtained based on the plurality of parameter obtaining requests are respectively stored in the first memory and the second memory

S4022: Obtain the parameter from the first memory and the parameter from the second memory

S4023: Combine the parameter obtained from the first memory and the parameter obtained from the second memory

S4024: Send the combined parameter to the second node

TO FIG. 5B                    TO FIG. 5B

FIG. 5A

S403: Receive the combined parameter, and train a model based on the combined parameter

S4031: The transceiver module of the second node receives the combined parameter

S4032: Transfer the combined parameter to the training module

S40321: Write the combined parameter into a cache located in the second node

S40322: Read the combined parameter from the cache, and transfer the combined parameter to the training module

S405: Combine the gradient data, and send combined gradient data to the first node

S404: Perform model training based on the combined parameter, to obtain gradient data

S406: After receiving the gradient, distinguish a gradient corresponding to the parameter stored in the first memory from a gradient corresponding to the parameter stored in the second memory, and separately update the parameter in the first memory and the parameter in the second memory

S4061: Update the parameter based on the gradient, to obtain an updated parameter

S4062: Write the updated parameter into a storage location of the parameter

FIG. 5B

EP 4 542 449 A1

**Node 2**

| Embedding table 3 | Embedding table 4 |
| Memory | Extended memory |
| Other value 3 | Other value 4 |

**Node 1**

| Embedding table 1 | Embedding table 2 |
| Memory | Extended memory |
| Other value 1 | Other value 2 |

FIG. 6

FIG. 7

FIG. 8

EP 4 542 449 A1

900

901

Processing module

902

Transceiver module

FIG. 9

## INTERNATIONAL SEARCH REPORT

| | International application No. |
|---|---|
| | **PCT/CN2023/108091** |

**A. CLASSIFICATION OF SUBJECT MATTER**

G06N 3/084(2023.01)i

According to International Patent Classification (IPC) or to both national classification and IPC

**B. FIELDS SEARCHED**

Minimum documentation searched (classification system followed by classification symbols)

IPC: G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 参数, 合并, 组合, 聚合, 叠加, 汇总, 汇聚, 结合, 传输, 发送, 降低, 减小, 通信, 模型, 网络, 训练, 学习, parameter, merge, combine, cluster, add, transform, send, reduce, communication, model, network, learn, train

**C. DOCUMENTS CONSIDERED TO BE RELEVANT**

| Category* | Citation of document, with indication, where appropriate, of the relevant passages | Relevant to claim No. |
|---|---|---|
| X | CN 113033800 A (SHENZHEN RESEARCH INSTITUTE, THE HONG KONG POLYTECHNIC UNIVERSITY) 25 June 2021 (2021-06-25) description, paragraphs [0058]-[0083], and figures 1-2 | 1-19 |
| X | CN 107330516 A (TENCENT TECHNOLOGY (SHENZHEN) CO., LTD.) 07 November 2017 (2017-11-07) description, paragraphs [0031]-[0093], and figures 1-5 | 1-19 |
| A | CN 113283596 A (BEIJING DAJIA INTERNET INFORMATION TECHNOLOGY CO., LTD.) 20 August 2021 (2021-08-20) entire document | 1-19 |
| A | CN 111813869 A (ALIPAY (HANGZHOU) INFORMATION TECHNOLOGY CO., LTD.) 23 October 2020 (2020-10-23) entire document | 1-19 |
| A | US 2021083950 A1 (ORACLE INTERNATIONAL CORPORATION) 18 March 2021 (2021-03-18) entire document | 1-19 |

☐ Further documents are listed in the continuation of Box C.　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 September 2023** | **23 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

<div align="center">

**INTERNATIONAL SEARCH REPORT**
**Information on patent family members**

</div>

International application No.

**PCT/CN2023/108091**

| Patent document cited in search report | | | Publication date (day/month/year) | Patent family member(s) | | | Publication date (day/month/year) |
|---|---|---|---|---|---|---|---|
| CN | 113033800 | A | 25 June 2021 | None | | | |
| CN | 107330516 | A | 07 November 2017 | None | | | |
| CN | 113283596 | A | 20 August 2021 | None | | | |
| CN | 111813869 | A | 23 October 2020 | None | | | |
| US | 2021083950 | A1 | 18 March 2021 | US | 2021250254 | A1 | 12 August 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210869512
- CN 202211634067